# EUROPÄISCHE PATENTSCHRIFT

(11) **EP 2 432 722 B1**
(45) Veröffentlichungstag und Bekanntmachung des Hinweises auf die Patenterteilung: **03.07.2013**
(21) Anmeldenummer: 10719530.7
(22) Anmeldetag: 03.05.2010
(51) Int. Cl.: B65H 54/28, B65H 54/38, H02K 7/14, H02K 33/16, H02K 41/03, H02K 1/27, H02K 3/28

(54) **CHANGIEREINRICHTUNG**
TRAVERSING DEVICE
DISPOSITIF DE VA-ET-VIENT

(30) Priorität: 20.05.2009 DE 102009022061
(43) Veröffentlichungstag der Anmeldung: 28.03.2012
(73) Patentinhaber: Oerlikon Textile GmbH & Co. KG, 42897 Remscheid (DE)
(72) Erfinder: HERZBERG, Marcus, 51381 Leverkusen (DE); SINGH, Suprit Pal, Balwyn, Victoria 3103 (AU)
(74) Vertreter: Kahlhöfer, Hermann
(86) Internationale Anmeldenummer: PCT/EP2010/055964
(87) Internationale Veröffentlichungsnummer: WO 2010/133443

(56) Entgegenhaltungen:
- EP-A2- 1 712 505
- CH-A- 536 782
- DE-A1-102006 014 616
- JP-A- 3 169 254
- JP-A- 8 217 332
- US-A1- 2004 108 402
- US-A1- 2006 113 851

## Beschreibung

Die Erfindung betrifft eine Changiereinrichtung gemäß dem Oberbegriff des Anspruchs 1.

Gattungsgemäße Changiereinrichtungen werden verwendet, um einen kontinuierlich zulaufenden Faden parallel zur Achse einer sich drehenden Hülse hin und her zu führen, so dass der Faden auf die Hülse zu einer Spule aufgewickelt wird.

Insbesondere bei zylindrischen oder bikonischen Kreuzspulen ohne stützende Scheiben an den Enden der Spulen wird eine Changiereinrichtung benötigt, die zwischen den Umkehrpunkten den Faden mit einer gleichmäßigen Geschwindigkeit führt und in den Umkehrpunkten die Bewegung mit sehr hoher Beschleunigung umgekehrt.

Aus dem Stand der Technik sind verschiedene Lösungen bekannt, die diese Anforderungen erfüllen. Wegen ihrer hohen Flexibilität bezüglich der Changiergeschwindigkeit und der Lage der Umkehrpunkte sind dabei Lösungen besonders interessant, bei denen der Changierfadenführer direkt ohne Verwendung eines die Bewegungsumkehr bewerkstelligenden Getriebes mit einem hochdynamischen Antrieb verbunden ist. Dies bedeutet, dass mit jeder Umkehr des Changierfadenführers auch die Bewegungsrichtung des Antriebes umgekehrt werden muss. Dies führt zu hohen Kräften oder Drehmomenten, die während der Umkehr aufgebracht werden müssen. Als gattungsgemäße Antriebe sind Linearmotoren mit direkter Verbindung zum Changierfadenführer sowie Schrittmotoren und geregelte Elektromotoren mit Riementrieb zum Antrieb des Changierfadenführers bekannt.

Um die bei der Bewegungsumkehr aufzubringenden hohe Drehmomente und Kräfte bereitzustellen, sind aus dem Stand der Technik verschiedene Ansätze bekannt, die in zwei Kategorien eingeteilt werden können. In der ersten Kategorie werden die Antriebe im Bereich der Bewegungsumkehr mit zusätzlichen Antriebsmittel ergänzt. In der WO 00/55082 A1 wird eine Changiereinrichtung mit Elektromotor und per Riemen angetriebenen Changierfadenführer gezeigt, die über einen zweiten Antrieb verfügt, welcher für die Bewegungsumkehr eine zusätzliche Bewegungskomponente auf den Riemen ausübt.

In der JP 08-217332 A wird vorschlagen, in den Umkehrpunkten eines Linearmotors mit zusätzlichen, frontal auf den Fadenführer wirkenden Magnetspulen in der Umkehrphase auf den Fadenführer einzuwirken.

Die EP 1 880 963 A2, EP 1 880 964 A2, DE 39 07 125 A1 und die US 2,964,260 beschreiben verschiedene passive Energiespeicher, die an dem Umkehrpunkten die kinetische Energie aufnehmen und zur Bewegungsumkehr wieder an die Changiereinrichtung zurückgeben.

Zu der zweiten Kategorie zählen die EP 0 453 622 B1, bei der vorschlagen wird, einen Elektromotor während der Umkehrpunkte mit einem höheren Strom zu betreiben. In der EP 0 906 239 B1 wird hingegen regelnd in den Ständerstrom des Elektromotors eingegriffen, so dass sich das Drehmoment des Motors in den Umkehrpunkten automatisch den Anforderungen anpasst.

Während bei den zuletzt genannten Konzepten die Möglichkeiten der Drehmomenterhöhung begrenzt sind, benötigen die Changiereinrichtungen der ersten Kategorie entweder zusätzlichen Bauraum an den Endpunkten des Changierhubes oder sind konstruktiv sehr aufwendig. Sollen jedoch mehrere Fadenspulen koaxial hintereinander angeordnet werden, wie es bei Textilmaschinen in Form von Aufspulfeldern häufig der Fall ist, steht dieser zusätzliche Bauraum nicht zur Verfügung.

Es ist daher Aufgabe der Erfindung, eine die Changiereinrichtung bereitzustellen, die bei kompakter Bauweise in den Umkehrpunkten ein besonders hohes Drehmoment beziehungsweise eine besonders hohe Kraft zur Verfügung stellt.

Diese Aufgabe wird erfindungsgemäß dadurch gelöst, dass der jeweils mit elektromagnetischen Spulen oder Permanentmagneten bestückte Stator und/oder Läufer des Elektroantriebes in den Umkehrbereichen anderes ausgeführt ist, als in Kontinuitätsbereich. Der Umkehrbereich ist definiert als derjenige Bereich, in dem Läufer und Stator während der Bewegungsumkehr des Changierfadenführers zusammenwirken. Unter Kontinuitätsbereich wird der Bereich verstanden, in dem Läufer und Stator während der gleichförmigen Bewegung zwischen den Umkehrpunkten des Changierfadenführers zusammenwirken. Unter Elektroantrieb wird hier sowohl ein Linearmotor verstanden, der direkt mit dem Fadenführer verbunden ist, als auch ein rotatorisch wirkender Motor in Form eines Schrittmotors oder eines geregelten Elektromotors.

Die Lage und Ausbildung der Umkehrbereiche und Kontinuitätsbereiche hängen in erster Linie ab von der Bauweise des Elektroantriebes.

In einer Ausführungsvariante der Erfindung ist der Elektroantrieb ein rotatorisch wirkender Elektromotor. Bevorzugt weist der Elektromotor einen Stator mit einer Vielzahl von elektromagnetischen Spulen und einen Läufer mit mehreren Permanentmagnetpolen oder mit mehreren als Elektromagnete wirkende elektromagnetischen Spulen auf, wobei die Spulen fremd- oder selbsterregt sein können.

Es werden nun sowohl auf dem Stator als auch auf dem Läufer Umkehrbereiche definiert, die so gewählt sind, dass Sie zum Zeitpunkt der Umkehr zusammenwirken. Für den Elektromotor bedeutet dies, dass sie sich zu diesem Zeitpunkt gegenüberstehen.

In einer anderen Ausführungsvariante ist der Elektroantrieb ein Linearmotor.

Bevorzugt weist dieser einen Permanentmagneten als Läufer auf sowie eine Reihe von elektromagnetischen Spulen als Stator, wobei diese besonders bevorzugt eine gleiche Ausrichtung der Spulenachse aufweisen.

Die Umkehrbereiche des Stators sind hier innerhalb der Endbereiche des Changierhubs, da hier die Umkehr stattfindet.

Die Größe der Umkehrbereiche des Stators wird üblicherweise in Abhängigkeit von den Formen der zu bewickelnden Fadenspulen gewählt. Für Changierungen mit veränderlicher Hublänge können sich die Umkehrbereiche über eine größere Länge von jeweils bis zu 25 % der Länge des Changierhubes oder noch darüber erstrecken.

Die Unterscheidung zwischen Umkehrbereich und Kontinuitätsbereich wird in einer Ausführungsform durch stärkere Permanentmagnete im Umkehrbereich erreicht. Dadurch sind die realisierbaren Kräfte in diesen Bereich höher als im Kontinuitätsbereich.

In einer anderen Ausführungsform weisen die elektromagnetischen Spulen im Umkehrbereich eine höhere Windungszahl auf, wobei diese Ausführungsform auch in Kombination mit der vorgenannten Ausführungsform verwendet werden kann.

Eine weitere Ausführungsform sieht vor, dass im Kontinuitätsbereich die Dichte der Permanentmagneten oder elektromagnetischen Spulen geringer ist. Abhängig von der Bauform des Elektroantriebes kann hier beispielsweise jede zweite elektromagnetische Spule oder jeder zweite Permanentmagnet fehlen. Ebenfalls und erfindungsgemäß eingeschlossen ist der Fall, dass in diesem Bereich alle elektromagnetischen Spulen oder Permanentmagnete fehlen. Dies ist beispielsweise in Kombination mit einem rotatorisch wirkenden Elektromotor sinnvoll.

Die Idee, die hinter diesen drei Ausführungsformen steckt, ist, einen Kompromiss zu finden zwischen der Verfügbarkeit einer hohen Kraft beziehungsweise einem hohen Drehmoment für die Umkehr der Changierbewegung und einen möglichst geringen Bauaufwand für die kontinuierliche Changierbewegung mit konstanter Geschwindigkeit, was sich letztendlich in einer geringeren Masse des Läufers und in einem geringeren Stromverbrauch auswirkt, welcher eine geringere Erwärmung mit sich führt.

In einer Weiterbildung der Erfindung sind in den Umkehrbereichen die elektromagnetischen Spulen mit zusätzlichen Kühlmitteln verbunden. Diese wirken einer zusätzlichen Erwärmung durch die höhere Windungsanzahl der elektromagnetischen Spulen in diesem Bereich entgegen.

Ein Ausführungsbeispiel wird im Folgenden unter Hinweis auf die beigefügten Zeichnungen näher beschrieben.

Es stellen dar:
Fig. 1 Eine mit einem Linearmotor ausgestattete erfindungsgemäße Changiereinrichtung,
Fig. 2 Eine mit einem rotatorisch wirkenden Elektromotor ausgestattete erfindungsgemäße Changiereinrichtung.

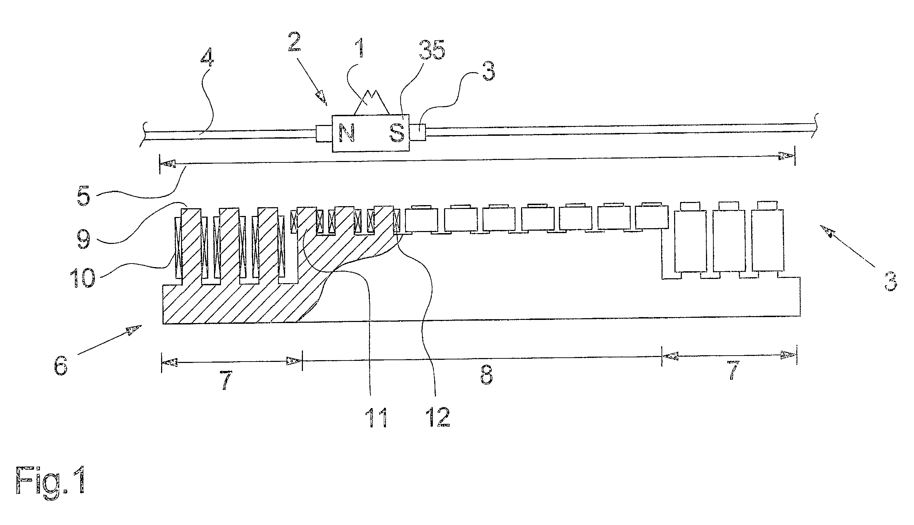

In Figur 1 ist eine erfindungsgemäße Changiereinrichtung mit einem Antrieb durch einen Linearmotor darstellt. Der als ein Permanentmagnet 35 ausgeführte Läufer 2 wird mittels einer Hülse 3 auf einer Führung 4 geführt, dass er innerhalb des Changierbereichs 5 hin und her geführt werden kann. Der Läufer 2 trägt einen Changierfadenführer 1, der zur Führung eines Fadens beim Bewickeln einer Fadenspule durch den Läufer 2 innerhalb des Changierbereiches 5 hin- und hergeführt wird.

Der Läufer 2 wirkt zusammen mit dem Stator 6, der mit einer Vielzahl von Jochen 9,11 und Spulen 10,12 ausgestattet ist. Die Spulen 10,11 sind mit einer steuerbaren Wechselstromquelle in der Weise verbunden, dass sich über die Längsrichtung des Stators 6 ein wanderndes Magnetfeld ergibt, das den Läufer 2 antreibt. Dabei werden die Wechselstromquellen so gesteuert, dass an den Endpunkten des Changierbereichs 5 die Bewegungsrichtung umgekehrt wird.

Der Bereich, in dem die Bewegungsrichtung umgekehrt wird, ist am Stator 6 als Umkehrbereich 7 gekennzeichnet. Der Bereich zwischen den Umkehrbereichen 7 ist als Kontinuitätsbereich 8 gekennzeichnet.

In den Umkehrbereichen 7 weisen die Spulen 10 eine höhere Windungszahl auf als die Spulen 12 im Kontinuitätsbereich 8. Hierdurch wird erreicht, dass der in einem der Umkehrbereiche 7 umkehrende Läufer 2 höhere Beschleunigungen ausführen kann. Im Kontinuitätsbereich 8 wirken hingegen nur geringe Kräfte auf dem Läufer 2, so dass hier kleinere Spulen 12 zum Einsatz kommen. Daher wirkt in diesen Bereich eine geringere Verlustleistung auf den Stator 6, was eine geringere Erwärmung zur Folge hat. Eine weitere Möglichkeit, der geringeren für die Bewegung des Changierfadenführers 1 erforderlichen Kraft im Kontinuitätsbereich 8 zu entsprechen, ist die Verminderung der Anzahl der Spulen 12 pro Längeneinheit, also die Verminderung der Spulen-Dichte in diesem Bereich. Dies muss jedoch bei der Ansteuerung der Spulen berücksichtigt werden.

Sowohl die Spulen 10 im Umkehrbereich als auch die Spulen 12 in Kontinuitätsbereich sind integraler Bestandteil des Stators 6. Die Breite des Stators 6 ist dabei nur geringfügig größer als der Changierbereich 5. Dadurch können mehrere erfindungsgemäße Changierungen nebeneinander angeordnet werden.

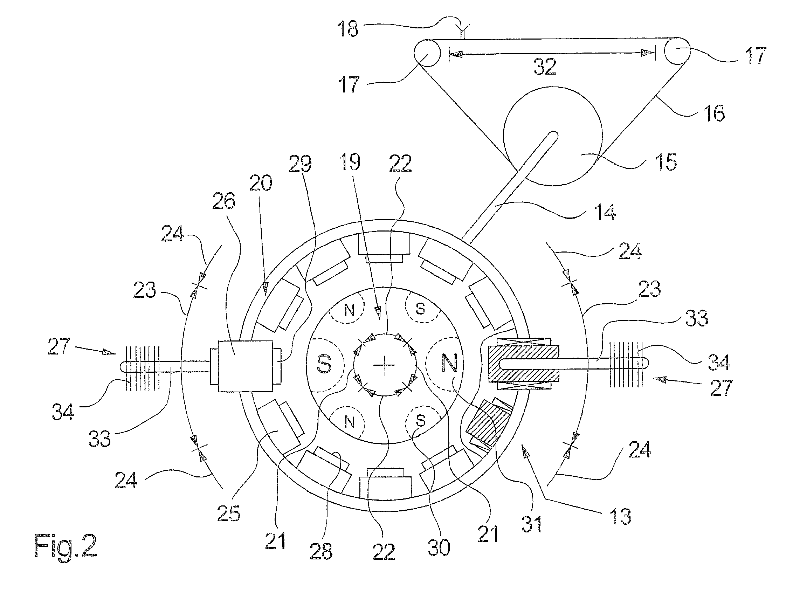

Figur 2 zeigt eine andere Ausführungsvariante der erfindungsgemäßen Changiereinrichtung. Als elektrischer Antrieb kommt ein rotatorisch wirkender Elektromotor 13 zum Einsatz, der über eine Welle 14 eine Riemenscheibe 15 antreibt. Diese treibt einen endlosen Riemen 16 an, der mittels Umlenkrollen 17 entlang des Changierbereiches 32 geführt ist, wo er einen Changierfadenführer 18 antreibt. Die in Übersetzung zwischen dem Elektromotor 13 und dem Changierfadenführer 18 ist so gewählt, dass der Elektromotor eine halbe oder ein Vielfaches einer halben Umdrehung für einen Changierhub ausübt. Sowohl ein Läufer 19 als auch ein Stator 20 des Elektromotors 13 verfügen über Umkehrbereiche 21 und 23 und Kontinuitätsbereiche 22 und 24. Diese sind so angeordnet, dass zum Zeitpunkt der Umkehr der Bewegungsrichtung des Changierfadenführers 18 die Umkehrbereiche 21 und 23 zusammenwirken.

Wie bei Figur 1 beschrieben werden auch hier die Spulen 25 und 27 des Stators 20 elektrisch so angesteuert, dass sich innerhalb des Stators 20 ein wanderndes, in diesem Fall ein rotierendes Magnetfeld einstellt.

In den Umkehrbereichen 21 des Läufers 19 ist dieser mit stärkeren Permanentmagnet-Polen ausgestattet als im Kontinuitätsbereich 19. Ebenfalls ist der Stator 20 in den Umkehrbereichen 23 mit Spulen 26 mit höherer Windungszahl ausgestattet als in Kontinuitätsbereich 24, wo Spulen 25 mit geringerer Windungszahl angeordnet sind. Diese Anordnungen haben zur Folge, dass das Drehmoment des Elektromotors 13 abhängig ist vom Drehwinkel der Welle 14, wobei der Changierfadenführer 18 und die Welle 14 so koordiniert sind, dass das Maximum des Drehmomentes mit der Umkehrposition des Changierfadenführers 18 zusammen fällt.

Es ist ebenfalls möglich, die Magnetpole 30 im Kontinuitätsbereich 22 des Läufers 19 auszulassen, was konstruktiv zugunsten stärkerer Magnetpole 31 im Umkehrbereich 21 des Läufers 19 ausgenutzt werden kann. Dadurch werden die Unterschiede zwischen dem Drehmoment-Maximum und dem Drehmoment-Minimum verstärkt. Es ist nicht zwingend erforderlich, dass eine halbe Umdrehung der Welle 14 dem vollständigen Changierbereich 32 entspricht. Vielmehr kann die Welle 14 auch zwischen den Umkehrpunkten des Changierfadenführers 18 mehrfach den Umkehrbereich 21 und 23 des Läufers 19 und Stators 20 durchfahren.

Weiterhin ist es möglich, am Stator 20 nur einen Umkehrbereich 23 vorzusehen, so dass ein Changierhub des Fadenführers 18 einer oder mehreren vollständigen Umdrehungen der Welle 14 entspricht.

Da die erfindungsgemäße Changiereinrichtung sich grundsätzlich gut eignet, in der Bewegungsumkehr mit der aus dem Stand der Technik bekannten höheren Bestromung der Spulen beaufschlagt zu werden, bietet es sich hier besonders an, die elektromagnetischen Spulen 26 im Umkehrbereich 21 des Läufers 19 mit einem Kühlmittel 27 zu versehen. Dazu sind in Figur 2 Heatpipes 33 mit Kühlrippen 34 außerhalb des Stators 20 dargestellt.

Die in den Ausführungsbeispielen nach Fig. 1 und Fig. 2 dargestellten Changiereinrichtungen sind nur beispielhaft. Die Erfindung erstreckt sich auch auf ähnliche Bauformen, bei welchen ein Changierfadenführer mittels eines Elektroantriebes durch Zusammenwirken von zumindest einem Stator und einem Läufer angetrieben wird.

**Bezugszeichenliste**

| | |
|---|---|
| 1 | Changierfadenführer |
| 2 | Läufer |
| 3 | Linearmotor |
| 4 | Führung |
| 5 | Changierbereich |
| 6 | Stator |
| 7 | Umkehrbereich des Stators |
| 8 | Kontinuitätsbereich des Stators |
| 9 | Joch im Umkehrbereich |
| 10 | elektromagnetische Spule im Umkehrbereich |
| 11 | Joch im Kontinuitätsbereich |
| 12 | elektromagnetische Spule im Kontinuitätsbereich |
| 13 | Elektromotor |
| 14 | Welle |
| 15 | Riemenscheibe |
| 16 | Riemen |
| 17 | Umlenkrolle |
| 18 | Changierfadenführer |
| 19 | Läufer |
| 20 | Stator |
| 21 | Umkehrbereich des Läufers |
| 22 | Kontinuitätsbereich des Läufers |
| 23 | Umkehrbereich des Stators |
| 24 | Kontinuitätsbereich des Stators |
| 25 | elektromagnetische Spule im Kontinuitätsbereich |
| 26 | elektromagnetische Spule im Umkehrbereich |
| 27 | Kühlmittel |
| 28 | Joch im Kontinuitätsbereich |
| 29 | Joch im Umkehrbereich |
| 30 | Magnetpol im Kontinuitätsbereich |
| 31 | Magnetpol im Umkehrbereich |
| 32 | Changierbereich |
| 33 | Heatpipes |
| 34 | Kühlrippen |
| 35 | Permanentmagnet |

## Patentansprüche

1. Changiereinrichtung zum Changieren eines kontinuierlich zulaufenden und auf einer Fadenspule aufzuwickelnden Fadens,
mit einem periodisch die Bewegungsrichtung eines eine Changierbewegung ausführenden Changierfadenführers (1, 18) umkehrenden Elektroantrieb (3, 13) mit einem Stator (6, 20) und einem Läufer (2, 19), die mit elektromagnetischen Spulen (10, 12, 25, 26) oder Permanentmagneten (30, 31) bestückt sind,
**dadurch gekennzeichnet, dass**
der Stator (6, 20) und/oder der Läufer (2, 19) mehrere Umkehrbereiche (7, 21, 23), in denen der Stator (6, 20) und der Läufer (2, 19) in der Umkehrphase der Changierbewegung zusammenwirken, sowie einen Kontinuitätsbereich (8, 22, 24), in dem der Stator (6, 20) und der Läufer (2, 19) zwischen den Umkehrphascn der Changierbewegung zusammenwirken, aufweisen, und dass eine Konfiguration des Stators (6, 20) und/oder des Läufers (2, 19) mit elektromagnetischen Spulen (10, 12, 25, 26) oder Permanentmagneten (30, 31) in den Umkehrbereichen (7, 21, 23) sich von einer anderen Konfiguration in dem Kontinuitätsbereich (8, 22, 24) unterscheiden.

2. Changiereinrichtung nach Anspruch 1,
**dadurch gekennzeichnet, dass**
der Elektroantrieb ein rotatorisch wirkender Elektromotor (13) ist.

3. Changiereinrichtung nach Anspruch 2,
**dadurch gekennzeichnet, dass**
der Elektromotor (13) den Stator (20) mit einer Vielzahl von elektromagnetischen Spulen (25, 26) und den Läufer (19) mit mehreren Permanentmagnetpolen (30, 31) oder mit mehreren als Elektromagnete wirkende elektromagnetischen Spulen aufweist.

4. Changiereinrichtung nach Anspruch 3,
**dadurch gekennzeichnet, dass**
der Stator (20) und der Läufer (19) je einen der Umkehrbereiche (23, 21) aufweisen und dass die Umkehrbereiche (23, 21) des Stators (20) und des Läufers (19) so angeordnet sind, dass sie während der Umkehr des Changierfadenführers (18) zusammenwirken.

5. Changiereinrichtung nach Anspruch 1,
**dadurch gekennzeichnet, dass**
der Elektroantrieb ein Linearmotor (3) ist.

6. Changiereinrichtung nach Anspruch 5,
**dadurch gekennzeichnet, dass**
der Linearmotor (3) den Läufer (2) aufweist, welcher als ein Permanentmagnet (35) ausgeführt ist, und dass der Linearmotor (3) den Stator (6) aufweist, welcher eine Vielzahl von elektromagnetischen Spulen (10, 12) aufweist.

7. Changiereinrichtung nach Anspruch 6,
**dadurch gekennzeichnet, dass**
die Achsen der elektromagnetischen Spulen (10, 12) parallel ausgerichtet sind.

8. Changiereinrichtung nach Anspruch 6 oder 7,
**dadurch gekennzeichnet, dass**
die Umkehrbereiche (7) des Stators (6) in den Endbereichen eines Changierbereiches (5) angeordnet sind.

9. Changiereinrichtung nach einem der vorhergehenden Ansprüche,
**dadurch gekennzeichnet, dass**
in den Umkehrbereichen (7, 21, 23) des Stators (6, 20) und/oder des Läufers (2, 19) stärkere Permanentmagneten (30, 31) eingesetzt sind als in den Kontinuitätsbereichen (8, 22, 24).

10. Changiereinrichtung nach einem der vorhergehenden Ansprüche,
**dadurch gekennzeichnet, dass**
in den Umkehrbereichen (7, 21, 23) des Stators (6, 20) und/oder des Läufers (2, 19) die Windungszahlen der elektromagnetischen Spulen (10, 12, 25, 26) höher ist als in den Kontinuitätsbereichen (8, 22, 24).

11. Changiereinrichtung nach einem der vorhergehenden Ansprüche,
**dadurch gekennzeichnet, dass**
in den Umkehrbereichen (7, 21, 23) des Stators (6, 20) und/oder des Läufers (2, 19) die Dichte der elektromagnetischen Spulen (10, 12, 25, 26) oder der Permanentmagneten (30, 31) höher ist als in den Kontinuitätsbereichen (8, 22, 24).

12. Changiereinrichtung nach einem der vorhergehenden Ansprüche,
**dadurch gekennzeichnet, dass**
in den Umkehrbereichen (7, 21, 23) des Stators (6, 20) und/oder Läufers (2, 19) die elektromagnetischen Spulen (26) mit zusätzlichen Kühlmitteln (27) verbunden sind.

## Claims

1. Traversing device for traversing a continuously arriving thread to be wound on a thread bobbin, with an electric drive (3, 13) which periodically reverses the direction of movement of a traversing thread guide (1, 18) executing a traversing movement and has a stator (6, 20) and a rotor (2, 19) which are equipped with electromagnetic coils (10, 12, 25, 26) or permanent magnets (30, 31), **characterized in that** the stator (6, 20) and/or the rotor (2, 19) has a plurality of reversal regions (7, 21, 23), in which the stator (6, 20) and the rotor (2, 19) cooperate in the reversal phase of the traversing movement, and a continuity region (8, 22, 24), in which the stator (6, 20) and the rotor (2, 19) cooperate between the reversal phases of the traversing movement, and **in that** a configuration of the stator (6, 20) and/or of the rotor (2, 19) with electromagnetic coils (10, 12, 25, 26) or permanent magnets (30, 31) in the reversal regions (7, 21, 23) differ from another configuration in the continuity region (8, 22, 24).

2. The traversing device as claimed in claim 1, **characterized in that** the electric drive is a rotary-acting electric motor (13).

3. The traversing device as claimed in claim 2, **characterized in that** the electric motor (13) has the stator (20) with a multiplicity of electromagnetic coils (25, 26) and has the rotor (19) with a plurality of permanent magnet poles (30, 31) or with a plurality of electromagnetic coils acting as electromagnets.

4. The traversing device as claimed in claim 3, **characterized in that** the stator (20) and the rotor (19) have in each case one of the reversal regions (23, 21), and **in that** the reversal regions (23, 21) of the stator (20) and of the rotor (19) are arranged such that they cooperate during the reversal of the traversing thread guide (18).

5. The traversing device as claimed in claim 1, **characterized in that** the electric drive is a linear motor (3).

6. The traversing device as claimed in claim 5, **characterized in that** the linear motor (3) has the rotor (2) which is designed as a permanent magnet (35), and **in that** the linear motor (3) has the stator (6) which has a multiplicity of electromagnetic coils (10, 12).

7. The traversing device as claimed in claim 6, **characterized in that** the axes of the electromagnetic coils (10, 12) are oriented in parallel.

8. The traversing device as claimed in claim 6 or 7, **characterized in that** the reversal regions (7) of the stator (6) are arranged in the end regions of a traversing region (5).

9. The traversing device as claimed in one of the preceding claims, **characterized in that** stronger permanent magnets (30, 31) are used in the reversal regions (7, 21, 23) of the stator (6, 20) and/or of the rotor (2, 19) than in the continuity regions (8, 22, 24).

10. The traversing device as claimed in one of the preceding claims, **characterized in that** the number of turns of the electromagnetic coils (10, 12, 25, 26) are higher in the reversal regions (7, 21, 23) of the stator (6, 20) and/or of the rotor (2, 19) than in the continuity regions (8, 22, 24).

11. The traversing device as claimed in one of the preceding claims, **characterized in that** the density of the electromagnetic coils (10, 12, 25, 26) or of the permanent magnets (30, 31) is higher in the reversal regions (7, 21, 23) of the stator (6, 20) and/or of the rotor (2, 19) than in the continuity regions (8, 22, 24).

12. The traversing device as claimed in one of the preceding claims, **characterized in that** the electromagnetic coils (26) are connected to additional cooling means (27) in the reversal regions (7, 21, 23) of the stator (6, 20) and/or rotor (2, 19).

## Revendications

1. Dispositif de changement destiné à changer un fil amené en continu et à l'enrouler sur une bobine de fil,
le dispositif présentant
un entraînement électrique (3, 13) doté d'un stator (6, 20) et d'un induit (2, 19) équipé de bobines électromagnétiques (10, 12, 25, 26) ou d'aimants permanents (30, 31) qui inversent périodiquement le sens de déplacement d'un guide-fil de changement (1, 18) qui exécute un déplacement de changement,
**caractérisé en ce que**
le stator (6, 20) et/ou l'induit (2, 19) présentent plusieurs zones d'inversion (7, 21, 23) dans lesquelles le stator (6, 20) et l'induit (2, 19) coopèrent dans la phase d'inversion du déplacement de changement, ainsi qu'une zone de continuité (8, 22, 24) dans laquelle le stator (6, 20) et l'induit (2, 19) coopèrent entre les phases d'inversion du déplacement de changement et
**en ce qu'**une configuration du stator (6, 20) et/ou de l'induit (2, 19) avec des bobines électromagnétiques (10, 12, 25, 26) ou des aimants permanents (30, 31) dans les zones d'inversion (7, 21, 23) se distingue d'une autre configuration dans la zone de continuité (8, 22, 24).

2. Dispositif de changement selon la revendication 1, **caractérisé en ce que** l'entraînement électrique est un moteur électrique (13) travaillant en rotation.

3. Dispositif de changement selon la revendication 2, **caractérisé en ce que** le moteur électrique (13) présente un stator (20) doté de plusieurs bobines électromagnétiques (25, 26) et un induit (19) doté de plusieurs pôles d'aimants permanents (30, 31) ou de plusieurs bobines électromagnétiques qui agissent comme électroaimants.

4. Dispositif de changement selon la revendication 3, **caractérisé en ce que** le stator (20) et l'induit (19) présentent chacun l'une des zones d'inversion (23, 21) et **en ce que** les zones d'inversion (23, 21) du stator (20) et de l'induit (19) sont disposées de telle sorte qu'elles coopèrent pendant l'inversion du guide-fil (18) de changement.

5. Dispositif de changement selon la revendication 1, **caractérisé en ce que** l'entraînement électrique est un moteur linéaire (3).

6. Dispositif de changement selon la revendication 5, **caractérisé en ce que** le moteur linéaire (3) présente un induit (2) configuré comme aimant permanent (35) et **en ce que** le moteur linéaire (3) présente un stator (6) qui présente plusieurs bobines électromagnétiques (10, 12).

7. Dispositif de changement selon la revendication 6, **caractérisé en ce que** les axes des bobines électromagnétiques (10, 12) sont orientés en parallèle.

8. Dispositif de changement selon les revendications 6 ou 7, **caractérisé en ce que** les zones d'inversion (7) du stator (6) sont disposées dans les parties d'extrémité d'une zone de changement (5).

9. Dispositif de changement selon l'une des revendications précédentes, **caractérisé en ce que** les aimants permanents (30, 31) utilisés dans les zones d'inversion (7, 21, 23) du stator (6, 20) et/ou de l'induit (2, 19) sont plus forts que ceux utilisés dans les zones de continuité (8, 22, 24).

10. Dispositif de changement selon l'une des revendications précédentes, **caractérisé en ce que** le nombre des enroulements des bobines électromagnétiques (10, 12, 25, 26) est plus élevé dans les zones d'inversion (7, 21, 23) du stator (6, 20) et/ou de l'induit (2, 19) que dans les zones de continuité (8,22,24).

11. Dispositif de changement selon l'une des revendications précédentes, **caractérisé en ce que** la densité des bobines électromagnétiques (10, 12, 25, 26) ou des aimants permanents (30, 31) est plus élevée dans les zones d'inversion (7, 21, 23) du stator (6, 20) et/ou de l'induit (2, 19) que dans les zones de continuité (8, 22, 24).

12. Dispositif de changement selon l'une des revendications précédentes, **caractérisé en ce que** les bobines électromagnétiques (26) sont raccordées à des moyens supplémentaires de refroidissement (27) dans les zones d'inversion (7, 21, 23) du stator (6, 20) et/ou dans l'induit (2, 19).
